# FASCICULE DE BREVET EUROPEEN

(11) **EP 1 623 792 B1**
(45) Date de publication et mention de la délivrance du brevet: **11.06.2008**
(21) Numéro de dépôt: 05107142.1
(22) Date de dépôt: 02.08.2005
(51) Int. Cl.: B23P 15/04, B21H 7/16

(54) **Procédé de fabrication de pièces constitutives d'une aube creuse par laminage**
Verfahren zum Walzen der Komponente einer hohlen Gebläseschaufel
Method for manufacturing the component parts of a hollow fan blade by rolling

(30) Priorité: 03.08.2004 FR 0451772
(43) Date de publication de la demande: 08.02.2006
(73) Titulaire: SNECMA, 75015 Paris (FR)
(72) Inventeur: Bergue, Jean-Pierre, 95230 Soisy sous Montmorency (FR); Breton, Michel, 60870 Rieux (FR); Franchet, Jean-Michel, Patrick, Maurice, 75018 Paris (FR); Lorieux, Alain, 95110 Sannois (FR); Sagot, Philippe, 92270 Bois Colombes (FR)
(74) Mandataire: Poulin, Gérard

(56) Documents cités:
- EP-A- 1 338 353
- US-A- 3 858 428
- US-A- 5 636 440
- US-A- 5 711 068
- US-A1- 2001 022 023

## Description

### DOMAINE TECHNIQUE

La présente invention se rapporte de façon générale au domaine des procédés de fabrication d'une pièce primaire pour aubes pour turbomachine, telles que des aubes creuses de soufflante, ou encore de tout autre type d'aubes de rotor ou de stator pour turbomachine ou propulseur.

### ÉTAT DE LA TECHNIQUE ANTÉRIEURE

Habituellement, une aube creuse de soufflante pour turbomachine comprend un pied d'épaisseur relativement importante servant à la fixation de cette aube dans un disque de rotor, ce pied étant prolongé radialement vers l'extérieur par une partie aérodynamique fine, appelée pale de l'aube.

De l'art antérieur (voir par exemple US-A-5 636 440), on connaît un procédé de fabrication d'une telle aube creuse, basé principalement sur l'utilisation de la technique de soudage par diffusion, associée à celle de formage superplastique. Dans ce procédé de l'art antérieur, deux ou trois pièces constitutives de l'aube sont d'abord définies, puis fabriquées séparément avant d'être superposées et assemblées entre elles à l'aide de la technique de soudage par diffusion, dans le but d'obtenir une préforme de l'aube désirée.

Par la suite, il est procédé à une mise au profil aérodynamique de la préforme préalablement fabriquée, puis à un gonflage par pression gazeuse et à un formage superplastique de cette préforme, afin d'aboutir à une aube présentant sensiblement sa forme finale qui subit un usinage terminal.

Comme cela a été évoqué ci-dessus, la fabrication de la préforme d'aube requiert une étape de réalisation d'au moins deux pièces primaires externes. La fabrication des pièces externes s'effectue typiquement par usinage d'ébauches de pièces primaires. Chacune des deux pièces externes usinées présente deux portions radialement opposées d'épaisseurs très différentes : la partie pied, épaisse, sert à la fixation de l'aube dans le disque de rotor, et la partie pale, aérodynamique et fine, s'étend à partir de la partie pied vers le bout radialement externe.

Différentes techniques ont été utilisées pour la fabrication de ces pièces externes. Par exemple, le document US-A-3 858 428 décrit le laminage de deux plaques partiellement superposées de façon à obtenir une partie de pièce, pour laquelle les plaques ne sont pas superposées, d'épaisseur supérieure.

Le document US-A-5 711 068 quant à lui décrit un procédé consistant à produire des pièces de matériau métallique parallélépipédiques, de longueur supérieure à la longueur de la préforme (de la partie pied à la partie pale), et d'épaisseur proche de celle de la partie pied. Chaque parallélépipède est ensuite coupé dans un sens oblique pour former deux pièces d'épaisseur s'évasant longitudinalement.

Complexes à mettre en oeuvre, ces procédés trouvent vite des limites en ce qui concerne les épaisseurs maximales de partie pied que l'on peut obtenir, et des éléments supplémentaires sont classiquement ajoutés pour former le pied de l'aube.

Au vu des variations d'épaisseur, la fabrication des pièces externes destinées à constituer au moins partiellement la préforme d'aube génère donc des coûts de matière et des coûts d'usinage extrêmement élevés, de sorte que le procédé de fabrication de l'aube creuse n'est pas totalement optimisé.

### EXPOSÉ DE L'INVENTION

L'invention a pour but de proposer un procédé de fabrication d'une aube creuse pour turbomachine remédiant au moins partiellement aux inconvénients mentionnés ci-dessus.

Cet but est atteint selon l'invention par un procédé de fabrication d'une pièce primaire externe selon la revendication 1, qui engendre des coûts de fabrication réduits de façon significative par rapport à ceux rencontrés dans l'art antérieur.

L'invention concerne aussi l'utilisation du laminage de forme pour fabriquer une ébauche de pièce primaire externe, et l'utilisation d'un approvisionnement sous forme tubulaire pour fabriquer une aube creuse.

L'invention se rapporte au prélèvement, dans une couronne tubulaire, de segments longitudinaux correspondant à une ou plusieurs ébauches de pièce primaire. Ces segments, ou les ébauches, peuvent ensuite être mis à plat pour être utilisés comme dans l'art antérieur afin d'assurer la finition des pièces et/ou la fabrication d'une aube creuse, par exemple par procédé de soudage par diffusion accompagné éventuellement d'un formage superplastique.

Avantageusement, un secteur prélevé dans la couronne est utilisé pour fabriquer plus d'une ébauche de pièce primaire, et au moins une section du segment dans son épaisseur est effectuée.

De façon préférée, la couronne comprend une protubérance au moins à une de ses extrémités pour former la partie pied de la pièce primaire. La couronne peut être fabriquée par laminage circulaire de forme.

### BRÈVE DESCRIPTION DES DESSINS

Les caractéristiques et avantages de l'invention seront mieux compris à la lecture de la description qui va suivre et en référence aux dessins annexés, donnés à titre illustratif sur lesquels :
- la figure 1 représente une aube creuse classique de turbomachine,
- la figure 2 représente une préforme d'aube, telle qu'obtenue après soudage par diffusion ou telle que modélisée pour définir les pièces primaires,
- la figure 3 montre une ébauche de pièce primaire,
- les figures 4 montrent, en perspective et en coupe, la couronne dans laquelle les ébauches sont prélevées,
- la figure 5 représente schématiquement un procédé de fabrication de la couronne, et
- les figures 6 montrent différents profils de parois pour une couronne utilisée selon l'invention.

### EXPOSÉ DÉTAILLÉ DE MODES DE RÉALISATION PARTICULIERS

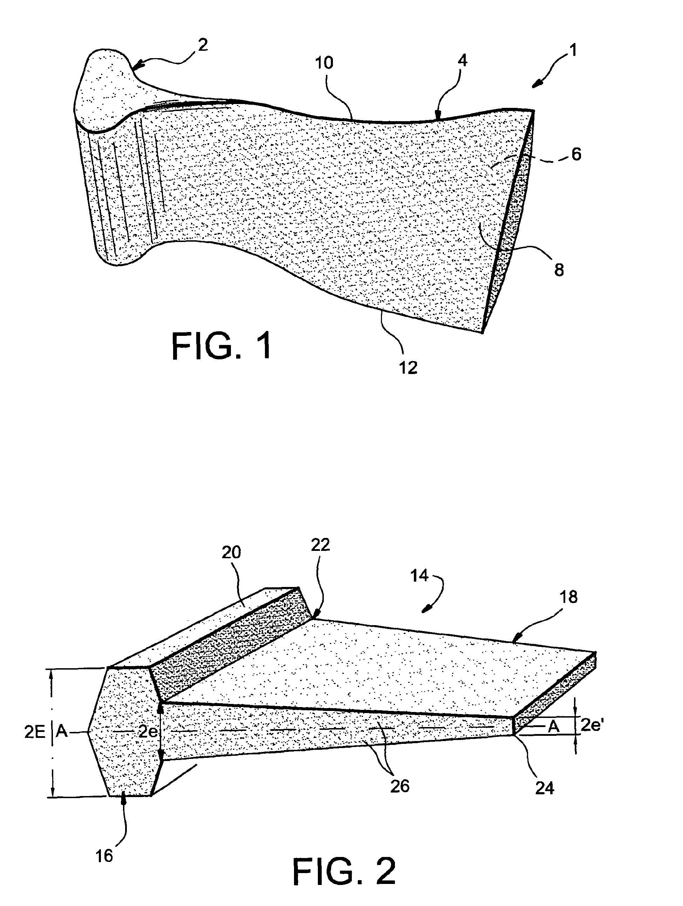

La figure 1 représente une aube creuse 1, du type aube de rotor de soufflante à grande corde, pour turbomachine (non représentée). De géométrie complexe, une telle aube, réalisée par exemple en titane ou un de ses alliages tel TA6V, comporte un pied 2 prolongé par une pale 4 dans une direction radiale. La pale 4, destinée à être placée dans la veine de circulation d'un flux d'air d'une turbomachine, est munie de deux surfaces extérieures, respectivement appelées surface d'extrados 6 et surface d'intrados 8, raccordées par un bord d'attaque 10 et un bord de fuite 12.

Pour fabriquer un tel profil complexe, on utilise, pour une aube creuse, de préférence le procédé de « soudage par diffusion et formage superplastique » (SPF/DB, de la dénomination anglo-saxonne « Super Plastic Forming / Diffusion Bonding »).

Quel que soit le procédé utilisé, la première étape consiste à modéliser le profil de l'aube 1 pour obtenir une préforme que l'on peut fabriquer par soudage de pièces primaires : les parois intrados et extrados, ou leur représentation graphique, sont plaquées sur un même plan. Cette opération peut s'effectuer par simulation, en utilisant des moyens de CAO (conception assistée par ordinateur), par exemple comportant un dégonflage suivi d'un dévrillage et d'un « décambrage », qui permet d'obtenir une préforme 14 telle qu'illustrée sur la figure 2.

Cette préforme 14 comporte une partie pied 16 qui est prolongée dans une direction radiale par une partie pale 18. Comme on peut le voir sur cette figure 2, la partie pied 16 dispose d'une portion interne 20 d'une épaisseur moyenne 2E élevée, qui est ultérieurement destinée à assurer la fixation de l'aube dans un disque de rotor de la turbomachine.

La partie pale 18 de la préforme 14 dispose d'une extrémité radialement interne 22 d'une épaisseur 2e et d'une extrémité radialement externe 24 d'une épaisseur 2e', plus faible généralement que l'épaisseur 2e. Cependant, la partie pale 18 de la préforme 14 est d'épaisseur sensiblement homogène.

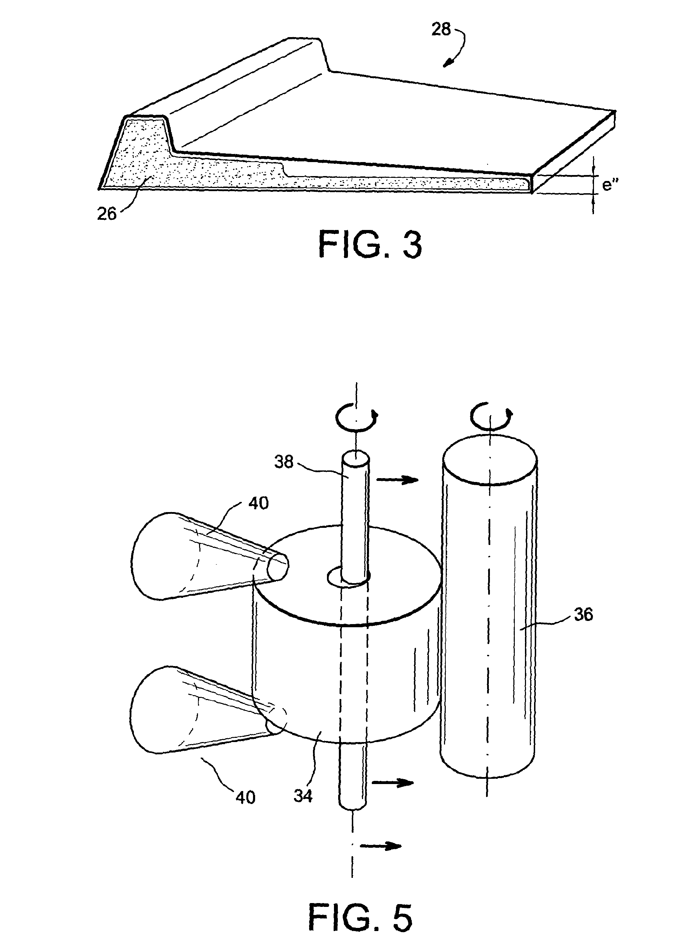

Afin de fabriquer la préforme 14 (qui, pour une aube creuse 1, doit pouvoir être « gonflée » donc ne peut être constituée d'un seul bloc), des pièces primaires 26 qui seront solidarisées sont définies. La définition des pièces primaires 26 détermine la forme d'ébauches 28, schématisées sur la figure 3, qui seront usinées pour obtenir ces pièces primaires. Les ébauches de pièces primaires 28 ainsi déterminées ont, malgré tout, elles aussi un profil complexe, avec notamment une partie pied d'épaisseur de l'ordre de E et une longue partie pale dont l'épaisseur est quasi-constante et de l'ordre de e'' > e > e'. Par exemple, la partie pied de la pièce primaire 26 et de l'ébauche 28 peut faire de l'ordre de 20 à 40 mm d'épaisseur E, pour une partie pale longue de 0,6 m à 1,2 m et l'ébauche 28 a une épaisseur e'' comprise entre 8 et 15 mm, de préférence de l'ordre de 10 mm en moyenne.

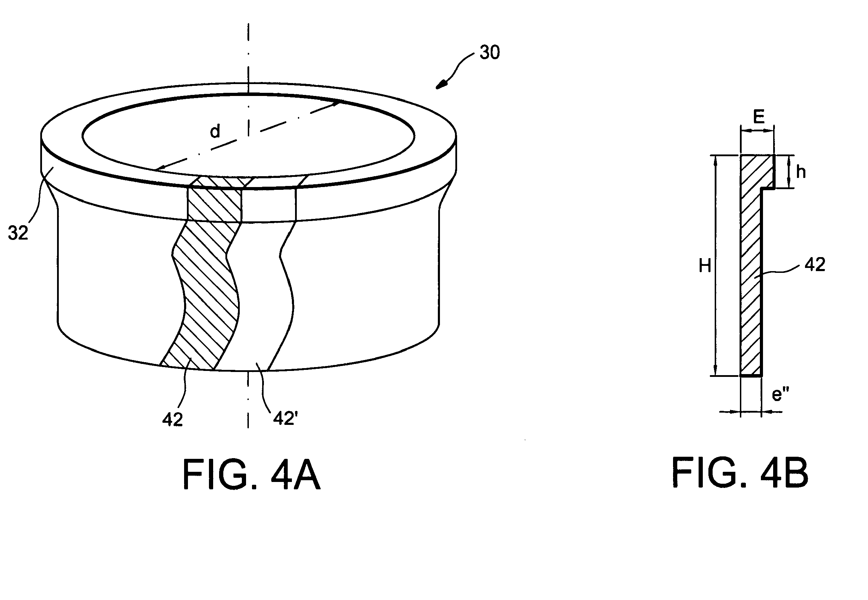

Selon l'invention, il est proposé de fabriquer des ébauches de pièces primaires externes 28 à partir d'un élément tubulaire creux, ou couronne, tel que schématisé sur les figures 4A et 4B. La couronne 30 possède une hauteur H de l'ordre de la longueur des pièces primaires à fabriquer, c'est-à-dire de la longueur des pales 1, soit par exemple 0,6 - 1,2 m ; sur la majeure partie de la hauteur H, la paroi de la couronne 30 est d'épaisseur e'' quasi-constante, pour un diamètre d de l'ordre de 4 m par exemple.

Par ailleurs, à l'une de ses extrémités, la couronne 30 possède une protubérance 32, d'épaisseur E et de hauteur h. Cette protubérance est destinée à fabriquer la partie pied 16 de la pièce primaire 26, et sa hauteur h est donc choisie en fonction de celle-ci ; par exemple, on peut avoir une hauteur h de l'ordre de 30 à 40 mm. La protubérance 32 fait avantageusement, dans ce mode de réalisation, saillie d'un seul côté des parois de la couronne 30, vers l'intérieur ou l'extérieur, l'autre surface de paroi restant linéaire en coupe.

La couronne 30 est de préférence fabriquée selon un procédé de laminage de forme à partir d'un approvisionnement tubulaire, par exemple sous forme de billette : voir figure 5. La billette 34 de départ est par exemple coulée ; elle est laminée par l'intermédiaire d'un rouleau rotatif 36, de diamètre 1050 mm par exemple, positionné le long de sa surface externe. Un mandrin rotatif 38 de diamètre 600 mm par exemple, inséré dans la billette 34, est déplacé en translation vers le rouleau 36 afin d'affiner les parois du tube 34 : par les forces de frottement, la billette 34 tourne autour de son axe qui est mobile, et son épaisseur diminue de façon homogène alors que son diamètre, tant interne qu'externe, augmente. Pour homogénéiser le laminage en épaisseur, des supports 40, écartés de 1,2 m par exemple, maintiennent la hauteur de l'élément tubulaire 34. Une protubérance 32 de la couronne finale 30 peut être obtenue en procédant à une découpe du rouleau 36 et/ou du mandrin 38 ; un gradient dans l'épaisseur de paroi de l'élément tubulaire peut aussi être envisagé.

Le paramétrage des vitesses de rotation et de translation, la taille du grain initial de la billette 34,... permettent d'obtenir une couronne qui correspond à l'usage désiré.

La couronne 30 est ensuite débitée dans le sens de sa hauteur et selon sa circonférence pour former des segments 42, 42'. La découpe par laser, par jet d'eau, ou le sciage peuvent être utilisés. On note à cet égard que le procédé selon l'invention, par la découpe d'une couronne 30, offre pour avantage supplémentaire qu'il est possible de débiter des segments, ou des ébauches, 42 de profil complexe, tel que schématisé sur la figure 4A : une restriction à une forme trapézoïdale n'est pas impérative, et les pertes de matière sont minimisées même pour une forme complexe de pièce primaire comme une forme en sabre.

Le segment 42 débité est ensuite remis « à plat », par une opération de forgeage conventionnelle, puis usiné au profil défini afin de former l'ébauche 28 puis la pièce primaire 26.

Le coût de fabrication de la couronne 30 est directement lié au rapport de sa hauteur sur son épaisseur H/e'' en fonction de son diamètre d. Or, une couronne 30 de diamètre supérieur à 4 m devient difficile à manipuler, et pour les aubes 1 actuelles, une hauteur H supérieure à 1 m est usuelle. Pour maintenir le coût de fabrication de la couronne 30 dans des limites raisonnables, une épaisseur supérieure ou égale à 30 mm est ainsi préconisée pour la couronne 30.

Afin de réduire l'épaisseur de la pièce primaire, on peut alors choisir d'accompagner le prélèvement du segment 42 d'une section, dans son épaisseur, de ce secteur 42 remis à plat : un ou plusieurs sciages du segment 42 permettent ainsi d'obtenir une pluralité d'ébauches 28, et de pièces primaires 26, de surface similaire mais plus fines.

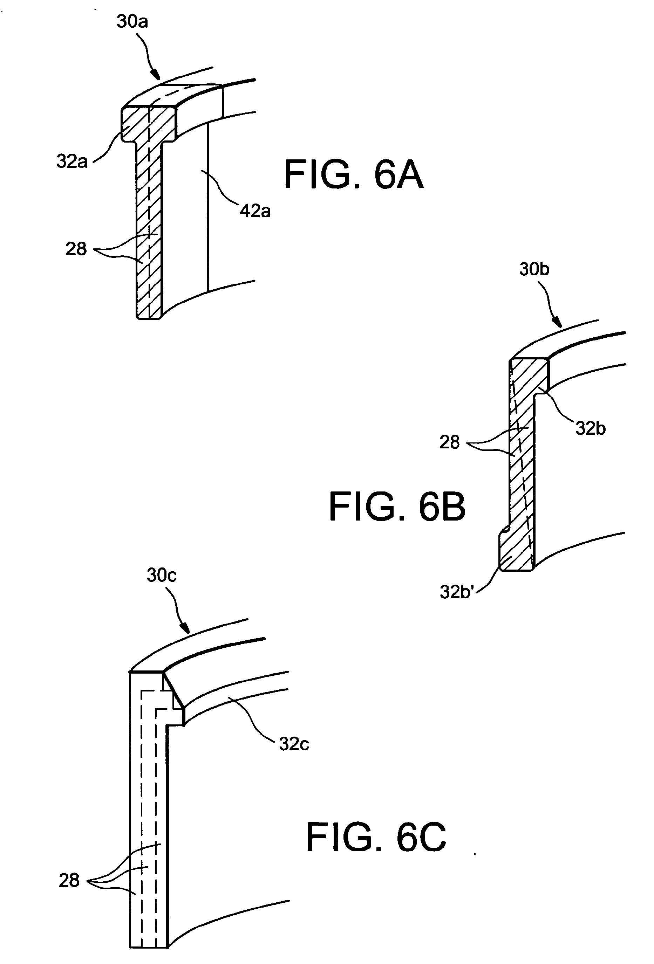

Sur les figures 6 sont représentés différents profils de couronnes qui peuvent être utilisés en particulier lorsqu'une section longitudinale suit le prélèvement du segment par découpe de la couronne dans le sens de sa hauteur et suivant sa circonférence.

La figure 6A montre ainsi un profil de couronne 30a où la protubérance 32a fait saillie à une extrémité et de chaque côté de la paroi de la couronne, à la fois vers l'extérieur et vers l'intérieur. Une fois le segment 42a prélevé, il est possible de faire une section selon la ligne en pointillés, c'est-à-dire dans l'épaisseur du secteur 42a, afin de prélever deux ébauches de pièces primaires symétriques 28.

Une autre possibilité concerne la figure 6B où deux protubérances 32b et 32b' sont présentes à chaque extrémité de la couronne 30b ; ici, l'une des protubérances 32b fait saillie vers l'intérieur et l'autre 32b' vers l'extérieur ; la section du segment pourra alors s'effectuer en diagonale comme représenté, ou parallèlement à ses flancs de façon analogue à la figure 6A.

Il est possible également de prévoir des sections successives du secteur. La figure 6C montre ainsi un profil de couronne 30c dans laquelle trois ébauches de pièces primaires sont prévues pour chaque segment. Pour simplifier la fabrication de la couronne 30c, il est possible, comme représenté, de lisser le profil de la protubérance 32c au lieu de lui donner une forme « en escalier » : les pertes de matière restent minimes.

Il est clair que de nombreuses combinaisons de ces solutions et des alternatives de ces profils sont envisageables.

De façon avantageuse, chacune des étapes de laminage et/ou de remise à plat des ébauches et pièces primaires est effectuée sur un métal chaud, par exemple autour de 900°C pour un alliage de titane, et avec un outil chauffé, par exemple entre 100 et 300°C.

Une fois réalisées, les pièces primaires externes 26 sont assemblées en une préforme 14 et solidarisées. Suivant la taille de l'aube, les contraintes qui lui seront appliquées,... une pièce primaire de maintien sensiblement sous forme de tôle destinée à raidir la structure creuse peut être insérée entre elles. Avantageusement, les pièces sont assemblées par soudage par diffusion. Ensuite, la préforme 14, éventuellement mise au profil aérodynamique, est usinée pour obtenir une aube 1. De façon préférée, cette étape est réalisée par un gonflage par pression gazeuse et un formage superplastique, selon les conditions connues dans la technique SPF/DB.

Grâce au procédé selon l'invention, il est donc possible de fabriquer une aube et une préforme d'aube à partir d'éléments simples, comme des couronnes, et avec des procédés d'usinages éprouvés, tels que le laminage, le sciage et le fraisage, même pour des pièces primaires complexes. Il est à noter que la fabrication de ce genre de pièce complexe atteint plus de 40 % du coût d'une aube ; en conséquence, le coût de fabrication d'une aube est considérablement réduit, au vu de la limitation des pertes de matière et de la réduction des opérations d'usinage, notamment d'usinage de précision. En effet, on peut noter que la fabrication de la couronne jouit de grande tolérance en ce qui concerne la forme de la couronne (circularité, co-axialité) ; de plus, cette étape de fabrication d'une couronne est unique pour jusque 60 pièces primaires.

## Revendications

1. Procédé de fabrication d'une pièce primaire (26) pour aube (1) creuse pour turbomachine, comprenant le prélèvement d'une ébauche (28) de la pièce primaire (26) dans une couronne (30), qui a une paroi tubulaire d'une première épaisseur (e " , E) entre deux extrémités, par la découpe de la paroi entre les deux extrémités, l'ébauche étant ainsi extraite d'un segment (42) de paroi entre deux parties d'extrémité et ayant la première épaisseur.

2. Procédé selon la revendication 1 comprenant en outre la mise à plat de l'ébauche ou du segment de paroi (28, 42).

3. Procédé selon la revendication 2 comprenant la section du segment de paroi (42) dans son épaisseur entre ses deux parties d'extrémité.

4. Procédé selon la revendication 3 comprenant une pluralité de sections du segment de paroi (42) dans son épaisseur entre ses deux parties d'extrémité.

5. Procédé selon l'une des revendications 1 à 4 dans lequel la couronne (30) possède au moins une protubérance (32) à une extrémité.

6. Procédé selon l'une des revendications 1 à 5 comprenant la fabrication de la couronne (30) par laminage de forme.

7. Procédé de fabrication d'une aube (1) creuse pour turbomachine comprenant un pied (2) et une pale (4), ledit procédé comprenant :
- une étape de réalisation de deux pièces primaires externes au moins (26) par le procédé selon l'une des revendications 1 à 6 ; et
- une étape de soudage par diffusion des deux pièces primaires externes pour réaliser une préforme d'aube (14), la préforme d'aube disposant d'une partie pale (18) et d'une partie pied (16).

8. Procédé de fabrication selon la revendication 7, **caractérisé en ce que** l'étape d'assemblage par soudage par diffusion des deux pièces externes (26) est suivie d'un gonflage par pression gazeuse et formage superplastique de ladite préforme (14).

9. Procédé selon l'une des revendications 7 à 8 comprenant la réalisation d'une troisième pièce primaire de maintien, la préforme (14) étant constituée des deux pièces primaires externes (26) encadrant la pièce primaire de maintien.

10. Utilisation d'une couronne cylindrique (30) qui possède au moins une protubérance (32) à une extrémité pour débiter, dans le sens de sa hauteur, des ébauches de pièces primaires d'aube creuse (1) de turbomachine.

11. Utilisation de la technique du laminage de forme dans un procédé de fabrication d'une pièce primaire d'aube creuse pour fabriquer une couronne cylindrique (30) dans laquelle des ébauches de pièces primaires (26) d'aube creuse (1) de turbomachine sont débitées.

## Claims

1. Method for manufacturing a primary part (26) for a hollow blade (1) for a turbomachine, comprising cutting of a blank (28) of the primary part (26) from a ring (30), which has a tubular wall with an initial thickness (e" , E) between two ends, by cutting the wall between the two ends, the blank thus being cut from a wall segment (42) between two end parts and its thickness being the initial thickness.

2. Method according to claim 1, also comprising flattening of the blank or the wall segment (28, 42).

3. Method according to claim 2 comprising the cut. out of the wall segment (42) in its thickness between its two end portions.

4. Method according to claim 3 comprising a plurality of cut-outs of the wall segment (42) in its thickness between its two end portions.

5. Method according to one of claims 1 to 4 in which the ring (30) includes a protuberance (32) at least one end.

6. Method according to one of claims 1 to 5 comprising manufacturing of the ring (30) by form rolling.

7. Method for manufacturing a hollow blade (1) for a turbomachine comprising a root (2) and an airfoil (4), said method comprising:
- a step for making at least two external primary parts (26) using the method according to one of claims 1 to 6; and
- a diffusion bonding step for welding the two primary external parts to make a blade preform (14), the blade preform comprising an airfoil part (18) and a root part (16).

8. Manufacturing method according to claim 7, wherein the diffusion bonding assembly step of the two external parts (26) is followed by inflation by applying gas pressure and superplastic forming of the said preform (14).

9. Method according to claim 7 or 8 including manufacture of a third primary support part, the preform (14) being composed of two external primary parts (26) surrounding the primary support part.

10. Use of a cylindrical ring (30) which is provided with, at one of its ends, at least one protuberance (32), for cutting, in the direction of its height, blanks of primary parts of hollow blade (1) of a turbomachine.

11. Use of the cylindrical form rolling technique in a manufacturing method of an external primary part of hollow blade to manufacture a cylindrical ring (30) in which blanks of primary parts (26) of hollow blade (1) of a turbomachine are cut.

## Patentansprüche

1. Verfahren zur Herstellung eines Primärwerkstücks (26) für eine hohle Turbomaschinen-Schaufel (1), das die Entnahme eines Rohlings (28) des Primärwerkstücks (26) aus einem Kranz (30), der eine rohrförmige Wand mit einer ersten Dicke (e", E) zwischen zwei Enden aufweist, durch das Abschneiden der Wand zwischen den beiden Enden umfasst, wobei der Rohling so aus einem Wandsegment (42) zwischen zwei Endabschnitten herausgeholt wird und die gleiche Dicke aufweist.

2. Verfahren nach Anspruch 1, das ferner das Abflachen des Rohlings oder Wandsegments (28, 42) umfasst.

3. Verfahren nach Anspruch 2, das den Trennschnitt durch das Wandsegment (42) in seiner Dicke von einem seiner Endabschnitte zum anderen umfasst.

4. Verfahren nach Anspruch 3, das eine Mehrzahl von Trennschnitten durch das Wandsegment (42) in seiner Dicke von einem seiner Endabschnitte zum anderen umfasst.

5. Verfahren nach einem der Ansprüche 1 bis 4, bei dem der Kranz (30) an einem Ende mindestens einen Vorsprung (32) aufweist.

6. Verfahren nach einem der Ansprüche 1 bis 5, das die Fertigung des Kranzes (30) durch Formwalzen umfasst.

7. Verfahren zur Herstellung einer hohlen `hurbomaschinen-Schaufel (1) mit einem Fuß (2) und einem Schaufelblatt (4), wobei dieses Verfahren umfasst:
- einen Arbeitsschritt der Herstellung von mindestens zwei äußeren Primärwerkstücken (26) durch das Verfahren nach einem der Ansprüche 1 bis 6, und
- einen Arbeitsschritt des Diffusionsverschweißens der beiden äußeren Primärwerkstücke zur Herstellung einer Schaufel-Vorform (14), wobei die Schaufel-Vorform einen Schaufelblatt-Teil (18) und einen Fuß-Teil (16) aufweist.

8. Herstellungsverfahren nach Anspruch 7,
**dadurch gekennzeichnet,**
**dass** auf den Arbeitsschritt des Zusammenfügens der beiden äußeren Primärwerkstücke (26) durch Diffusionsverschweißen ein Aufblasen mittel Gasdruck und superplastisches Formen dieser Vorform (14) folgt.

9. Verfahren nach einem der Ansprüche 7 bis 8, das die Herstellung eines dritten Ilalte-Primärwerkstücks umfasst, wobei die Vorform (14) von den beiden äußeren Primärwerkstücken (26) gebildet wird, die das IIalte-Primärwerkstück umschließen.

10. Verwendung eines zylinderförmigen Kranzes (30), der an einem Ende mindestens einen Vorsprung (32) aufweist, um in der Richtung seiner Höhe Rohlinge von Primärwerkstücken für hohle Turbomaschinen-Schaufeln (1) herauszuschneiden.

11. Anwendung der Technik des Formwalzens in einem Verfahren zur Herstellung eines Primärwerkstücks einer hohlen Schaufel, um einen zylinderförmigen Kranz (30) zu fertigen, wobei Rohlinge von Primärwerkstücken (26) für hohle Turbomaschinen-Schaufeln herausgeschnitten werden.
